# EUROPEAN PATENT APPLICATION

(11) **EP 2 975 901 A1**
(43) Date of publication of application: **20.01.2016**
(21) Application number: 14306147.1
(22) Date of filing: 14.07.2014
(51) Int. Cl.: H04W 74/00, H04W 74/08

(54) **Random access for wireless multicarrier communications adapting a Distributed Queuing Random Access Protocol**

(71) Applicant: ALCATEL LUCENT, 92100 Boulogne-Billancourt (FR)
(72) Inventor: Saur, Stephan, 70435 Stuttgart (DE)
(74) Representative: 2SPL Patentanwälte PartG mbB

(57) **Abstract**

Embodiments relate to a concept for enabling random access of a wireless device to a wireless multicarrier communication system. It is provided, by the wireless device, an uplink random access signal (310) associated with a queuing system, the uplink random access signal (310) comprising a random access request portion (311) for a sending random access request and a message portion (312) for sending a data message. The random access request portion and the message portion extend over a plurality of time symbols and a plurality of uplink subcarriers. It is provided, by the communication network and in response to the uplink random access signal (310), a downlink signal (340) associated with the queuing system, the downlink signal (340) comprising a feedback signal portion (342) for providing feedback on a request queue and/or a data message queue of the queuing system. The feedback signal portion (342) extends over a plurality of time symbols and a plurality of downlink subcarriers.

## Description

Embodiments of the present disclosure generally relate to wireless communication systems and, more particularly, to random access protocols for multicarrier communications.

### Background

This section introduces aspects that may be helpful in facilitating a better understanding of embodiments of the invention(s). Accordingly, the statements of this section are to be read in this light and are not to be understood as admissions about what is in the prior art or what is not in the prior art.

It is anticipated that an important application for 5^{th} Generation (5G) systems will be Machine Type Communications (MTC) and the Internet of Things (IoT). The massive amount of machine-type devices may easily be one order of magnitude larger than human communication partners. At the same time, 5G may have to support high bit rate traffic with high spectral efficiency as well. The large number of MTC devices (a large fraction of them with sporadic traffic) may drive the need that 5G systems have to drop signaling overhead and support more energy-efficient communication than current systems do.

The 5G mobile radio system will integrate multiple different services like voice, video, web browsing, file transfer, gaming, text messaging, and machine type traffic. This disclosure addresses the random access channel in 5G, and in particular an efficient transmission of short messages (< 1kB) in the random access channel in a connectionless mode. Many applications in 5G systems (text, machine type traffic) will be characterized by very low data rates and only sporadic transmission of packets. Furthermore, a tremendous increase of the number of devices (e.g. 10 devices per user) is expected in the next years. In consequence, the number of devices trying to get network access simultaneously will increase as well, particularly in the case of event driven machine type traffic. A proper design of the random access channel is therefore one decisive element for the overall performance of 5G.

Many existing cellular radio systems like Long-Term Evolution (LTE) utilize slotted ALOHA based random access procedures. A typical realization of this scheme provides a set of orthogonal code words selected randomly by the devices. If two devices utilize the same code word in the same time slot, a collision occurs, and the devices have to wait for a certain time period until they may undertake another attempt. However, assuming a continuous arrival of new devices that try to get access to the network, the collision probability is the same for each attempt. In particular if the traffic load is high, the performance is degraded significantly. The devices waste a lot of energy and the delay until a message is successfully delivered may become unacceptable. The straightforward solution to provide a sufficiently big number of code words is neither flexible nor spectrum efficient.

Furthermore, current cellular radio technologies do not offer the possibility to transmit a short message in the random access channel. Instead, the device has to request radio resources and to wait until these are granted. This principle is reasonable for high data rate applications, but extremely inefficient if the payload is small, i.e., the ratio between the payload itself and the corresponding control information becomes bad. Generally, using existing solutions, the amount of control information in the systems increases with the number of devices

Hence, there is a desire for improved random access schemes, in particular for future generations of wireless or mobile communication systems.

### Summary

Some simplifications may be made in the following summary, which is intended to highlight and introduce some aspects of the various example embodiments, but such simplifications are not intended to limit the scope of embodiments. Detailed descriptions of example embodiments adequate to allow those of ordinary skill in the art to make and use the inventive concepts will follow in later sections.

According to one aspect of the present disclosure, it is provided a method for enabling random access of a wireless device to a wireless multicarrier communication system. The method includes providing or sending, by the wireless device, an uplink random access signal associated with a queuing system. The uplink random access signal includes a random access request portion for a sending random access request. Further, the uplink random access signal includes a message portion for sending a data message. The random access request portion and the message portion span or extend over a plurality of time symbols and a plurality of uplink subcarriers of a multicarrier signal. The method further includes providing or sending, by the communication network and in response to the uplink random access signal, a downlink (random access) signal associated with the queuing system. The downlink signal includes a feedback signal portion for providing feedback on a request queue and/or a data message queue of the queuing system. The feedback signal portion extends or spans over a plurality of time symbols and a plurality of downlink sub-carriers.

Embodiments provide an enhancement of the conventional Distributed Queuing Random Access Protocol (DQRAP). Embodiments adapt the conventional DQRAP for a multi-carrier radio system like Orthogonal Frequency-Division Multiplexing (OFDM), Filter-Bank-based Multi-Carrier (FBMC), or so-called Universal Filtered Multi-Carrier (UFMC), for example. UFMC can be considered as a generalization of filtered OFDM and FBMC. While filtered OFDM uses filtering for an entire frequency band and FBMC uses a filtering per subcarrier, UFMC relies on filtering on a per sub-band basis, for a group of subcarriers, e.g. a Physical Resource Block (PRB) in the LTE terminology.

While the original DQRAP operates solely as Time Division Multiple Access (TDMA) scheme in Time Division Duplex (TDD), some embodiments extend the scheme such that both time and frequency domains may be exploited, i.e., the information to be transmitted is mapped on time symbols and frequency sub-carriers. The queuing system of the proposed random access scheme provides two distributed queues to: (a) resolve contention and (b) to schedule the transmission of data messages. The request queue may indicate a number of unresolved access request collisions. The data message queue may indicate a number of messages waiting for transmission.

In some embodiments, the uplink random access signal and the related downlink signal associated with the same queuing system constitute a half-duplex system. That is to say, embodiments suggest an interlaced frame structure between signal frames of the uplink random access signal and signal frames of the downlink (random access) signal.

In some embodiments, the uplink random access signal and the downlink signal associated with the same queuing system may be provided or operated in Frequency Division Duplex (FDD). Hence, some embodiment allow for the extension of DQRAP to FDD systems, i.e. uplink and downlink operate in different frequency bands. Note that "uplink" refers to the communication direction from a wireless device to a network entity, such as a base station, for example. "Downlink" refers to the opposite communication direction from a network entity to a wireless device.

If the two aforementioned options half-duplex and FDD are combined, there may be an interlaced frame structure for Half Duplex FDD operation. For example, for module cost reasons low-end machine devices may operate in Half-Duplex FDD, i.e., they may alternately transmit on the uplink (UL) frequency band or receive on the downlink (DL) frequency band.

In some embodiments, the method may further include an act of providing or transmitting, by a different wireless device and between two subsequent frames of the uplink random access signal associated with the (same) queuing system, a frame of a different uplink random access signal associated with a different queuing system. Also, in response to the different uplink random access signal, a frame of a different downlink signal associated with the different queuing system may be provided or transmitted between two subsequent frames of the downlink signal associated with the queuing system. Hence, two interlaced queuing systems that may work in the general case independent from each other may be used. Each single queuing system may constitute a Half-Duplex FDD system, whereas both queuing systems together may constitute full duplex FDD, thus achieving the required efficient usage of the radio channel. The interlaced design may also minimize the waiting time of a device that intends to enter the random access procedure.

In some embodiments, the uplink random access signal is provided in a frame structure, e.g. on a frame by frame basis. The random access request portion of an uplink random access signal frame may use physical radio resources accommodating or enabling at least three random access requests of different wireless devices. Thereby the proposed multi-carrier random access protocol may achieve a performance level approaching that of a hypothetical perfect scheduling protocol.

In some embodiments, the message portion of the uplink random access signal frame is provided subsequently to the frame's random access request portion. A wireless device may transmit a data message in the message portion and/or a request in one of the time symbols provided by the random access request portion.

In some embodiments, providing the downlink (random access) signal comprises providing or transmitting a synchronization signal portion enabling a temporal synchronization of the wireless device. In one embodiment, the downlink signal is provided in a frame structure, and the synchronization signal portion of the downlink signal frame spans the plurality of downlink subcarriers and at least the signal frame's first time symbol. However, other positions of synchronization signal portions, e.g. in the middle or at the end of the of the downlink signal frame, are also possible. A wireless device thus may synchronize on both random access request portion and message portion boundaries.

In some embodiments, the feedback signal portion of the downlink signal comprises at least one of
- an indicator for a current length of the request queue,
- an indicator for a current length of the data message queue,
- a request collision indicator related to the random access request portion of the uplink random access signal,
- a data message collision indicator related to the message portion of the uplink random access signal;
- a received signal strength indication of the uplink random access signal.

In one embodiment, the request collision indicator may provide ternary feedback for each request symbol of the random access request portion (e.g., no request detected, exact one request detected, or request collision). Likewise, the data message collision indicator may provide ternary feedback for the message field (e.g., no message, exact one message, or message collision), for example.

In some embodiments, providing the downlink signal also comprises providing an acknowledgement signal portion. The downlink acknowledgement signal portion may indicate whether the wireless device's uplink data message has been successfully received. In some embodiments, the downlink signal is provided in a frame structure. Here, the acknowledgement signal portion of a downlink signal frame may span the plurality of downlink subcarriers and at least the frame's last time symbol. However, other positions of acknowledgement signal portions, e.g. in the middle or at the beginning of the of the downlink signal frame, are also possible.

In some embodiments, the queuing system of the proposed random access scheme may comprise or use a plurality of physical radio resource sets for simultaneous transmission of data messages associated with different wireless devices. For example, the different physical radio resource sets of the queuing system may be separated by a Frequency Division Multiple Access (FDMA) technique, a Code Division Multiple Access (CDMA) technique, a Space Division Multiple Access (SDMA) technique, or a combination thereof.

Additionally or alternatively, the proposed random access scheme may use a plurality of contemporarily operating queuing systems. Each of the queuing systems may provide a queuing-system-specific uplink- and downlink random access signal both spanning a plurality of time symbols and a plurality of subcarriers, respectively. For example, the different queuing systems may be separated by a Frequency Division Multiple Access (FDMA) technique, a Code Division Multiple Access (CDMA) technique, a Space Division Multiple Access (SDMA) technique, or a combination thereof.

According to a further aspect of the present disclosure, it is provided a wireless device for a wireless multicarrier communication system. The wireless device includes transmitter circuitry operable or configured to transmit an uplink random access signal associated with a queuing system. The queueing system may comprise two subsystems: (1) a queueing contention resolution subsystem, and (2) a data transmission subsystem. The uplink random access signal comprises a random access request portion for a sending random access request and a message portion for sending a data message. The random access request portion and the message portion both span or extend over a plurality of time symbols and a plurality of uplink subcarriers of a multicarrier signal. The wireless device further includes receiver circuitry operable or configured to receive, in response to the uplink random access signal, a downlink signal associated with the same queuing system. The downlink signal comprises a feedback signal portion for providing feedback on a request and/or a data message queue. The feedback signal portion spans a plurality of time symbols and a plurality of downlink subcarriers.

The wireless device may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a car, a mobile relay transceiver, etc. A mobile transceiver may also be referred to as User Equipment (UE) or mobile in line with the 3GPP terminology.

According to yet a further aspect of the present disclosure, it is provided a network entity of a wireless multicarrier communication system. The network entity includes receiver circuitry operable or configured to receive a first uplink random access signal associated with a first queuing system. The first uplink random access signal comprises a random access request portion for a sending random access request and a message portion for sending a data message. The random access request portion and the message portion extend over a plurality of time symbols and a plurality of uplink subcarriers of a multicarrier signal. The network entity further includes transmitter circuitry operable or configured to transmit, in response to the first uplink random access signal, a first downlink signal associated with the first queuing system. The first downlink signal comprises a feedback signal portion for providing feedback on a request and/or a data message queue of the first queuing system. The first downlink signal or its feedback signal portion spans a plurality of time symbols and a plurality of downlink subcarriers.

In some embodiments, the network entity may comprise a base station or a base station transceiver. A base station transceiver can be located in the fixed or stationary part of the network or system. A base station transceiver may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with present or future radio signals as, for example, standardized by 3GPP. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit.

In some embodiments, the network entity's receiver circuitry may be configured to receive a frame of a second uplink random access signal associated with a second queuing system between two subsequent frames of the first uplink random access signal associated with the first queuing system. The transmitter circuitry may be configured to transmit, in response to the second uplink random access signal, a frame of a second downlink random access signal associated with the second queuing system between two subsequent frames of the first downlink random access signals associated with the first queuing system.

The network entity may be configured to perform the acts of the described method. Some embodiments comprise digital circuitry installed within the network entity or an apparatus thereof for performing the respective acts. Such a digital control circuitry, e.g., a Digital Signal Processor (DSP), a Field-Programmable Gate Array (FPGA), an Application-Specific Integrated Circuit (ASIC), or a general purpose processor may be coupled to memory circuitry and needs to be configured accordingly by hardware and/or software. Hence, yet further embodiments also provide a computer program having a program code for performing embodiments of the method(s), when the computer program is executed on a computer or a programmable hardware device.

Embodiments may be easily adapted for the operation in a TDD system.

In some embodiments, the size of the feedback information per queuing system does not depend on the number of devices assocoated with said queuing system for small message transmission. Embodiments proposing interlaced frame structure may support half-duplex FDD and may thus be an enabler for cheap M2M transceiver modules. Further, an interlaced design of two independet queuing systems may avoid unnecessary waiting periods and may minimize the delay time of messages.

Furthermore, embodiments may be energy efficient, because they may minimize the required on-time of the M2M transceiver. Embodiments may also be spectrum efficient, because collisions may be restricted to the request symbols, i.e. retransmissions of messages due to collisions are avoided.

Embodiments combine the benefits of random access and scheduled access. If the traffic load is light embodiments behave like random access, and with increasing traffic load rhe proposed concept changes over smoothly to reservation based access.

### Brief description of the Figures

Some embodiments of apparatuses and/or methods will be described in the following by way of example only, and with reference to the accompanying figures, in which
- Fig. 1: illustrates a state transition diagram of DQRAP;
- Fig. 2: schematically illustrates a flowchart of a method for enabling random access of a wireless device to a wireless multicarrier communication system;
- Fig. 3: illustrates an embodiment of the proposed random access scheme;
- Fig. 4: shows uplink and downlink frames of one queuing system operated in half-duplex FDD;
- Fig. 5: illustrates an example downlink feedback format;
- Fig. 6: illustrates different frame structure options for three interlaced queuing systems and four interlaced queuing systems;
- Fig. 7a, b: shows *K* sets of resources controlled by *K* queuing systems and by one queuing system;
- Fig. 8a, b: shows possible downlink feedback for *K* sets of resources controlled by *K* queuing systems and one queuing system;
- Fig. 9a, b: illustrates a schematic view of example frame structures for *K* sets of resources controlled by *K* queuing systems and one queuing system;
- Fig. 10: schematically illustrates a block diagram of a wireless device for a wireless multicarrier communication system; and
- Fig. 11: schematically illustrates a block diagram of a network entity of a wireless multicarrier communication system.

### Description of Embodiments

Various example embodiments will now be described more fully with reference to the accompanying drawings in which some example embodiments are illustrated.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures. It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g.., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/ or "including," when used herein, specify the presence of stated features, integers, steps, operations, elements and/or components, but do not preclude the presence or addition of one or more other features, integers, steps, operations, elements, components and/ or group thereof.

It should also be noted that in some alternative implementations, the functions/ acts noted may occur out of the order noted in the figures. For example, two figures shown in succession may in fact be executed substantially concurrently or may sometimes be executed in the reverse order, depending upon the functionality/acts involved.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Portions of example embodiments and corresponding detailed description are presented in terms of software, or algorithms and symbolic representations of operation of data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more Central Processing Units (CPUs), Digital Signal Processors (DSPs), Application- Specific Integrated Circuits, Field Programmable Gate Arrays (FPGAs), computers, or the like.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

As disclosed herein, the term "storage medium", "storage unit" or "computer readable storage medium" may represent one or more devices for storing data, including Read Only Memory (ROM), Random Access Memory (RAM), magnetic RAM, core memory, magnetic disk storage mediums, optical storage mediums, flash memory devices and/ or other tangible machine readable mediums for storing information. The term "computer- readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks.

A code segment may represent a procedure, function, subprogram, program, routine, subroutine, module, software package, class, or any combination of instructions, data structures or program statements. A code segment may be coupled to another code segment or a hardware circuit by passing and /or receiving information, data, arguments, parameters or memory contents. Information, arguments, parameters, data, etc. may be passed, forwarded, or transmitted via any suitable means including memory sharing, message passing, token passing, network transmission, etc.

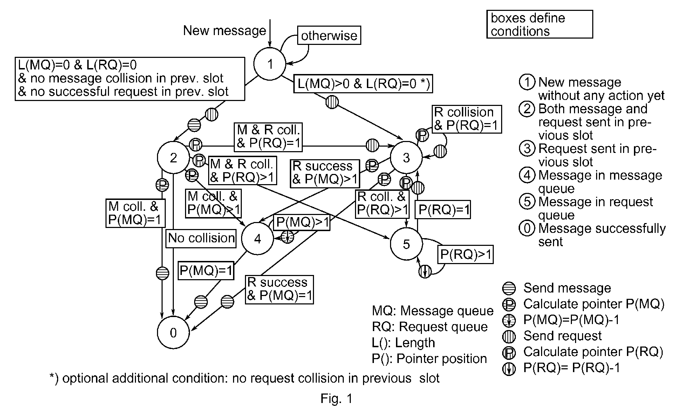

To facilitate the understanding of the Distributed Queuing Random Access Protocol (DQRAP) underlying embodiments of the present disclosure, Fig. 1 illustrates an example state transition diagram of DQRAP. Important facts are explained below. For a complete description of the protocol it is referred to W. Xu and G. Campbell, "A near perfect stable random access protocol for a broadcast channel," In proceedings of the IEEE International Conference on Communications (ICC '92), pages 370-374, Chicago, USA, June 1992.

Consider a communication system serving a large number of bursty devices which communicate over a multi-access broadcast channel. The devices may generate data messages, respectively. The access channel may be divided into frames of fixed length. Each frame comprises random access request portion including m request symbols followed by a message portion. A device may transmit a message in the message portion and/or a request in one of the request symbols of the request portion. All devices can synchronize on both request symbol and message symbol boundaries and all devices may detect ternary feedback information for each request symbol and message symbol from the channel after transmission. One basic principle of DQRAP is to resolve one initial collision before trying another one. In the DQRAP protocol two distributed queues are maintained by each wireless device: the data transmission or data message queue, or simply MQ, and the collision resolution or request queue, or simply RQ. L(MQ) and L(RQ) denote the queue lengths of the MQ and RQ, respectively.

Turning now to Fig. 1, a device in state "1" with a new message may read at first a feedback information related to a previous uplink access channel frame. Eventually, the device has to wait until previous request collisions are resolved, i.e. until L(RQ) = 0. Once this condition is fulfilled it can transmit its first request.

If the data message queue MQ is empty as well and if no previous message collisions or previous successful requests indicate that another device will send a message, i.e. L(MQ) =0 and L(RQ) = 0, the device may transmit its message in the same uplink frame. This is the state transition from state "1" to state "2". In this special case (request AND message transmission in the same frame) it is possible that the message collides with the message of another device, which initiated the random access procedure at the same point of time, and consequently read the same feedback information and followed the same rules. However, in spite of this message collision, it is possible that the requests of these two devices did not collide because both devices had chosen different request symbols or slots, for example, our device utilized request symbol 3 and the other device utilized request symbol 1. In this case, the other device would enjoy priority because request symbols with smaller index *i* (*i*=1...*R*) may be preferred (earlier message transmission and earlier request collision resolution).

Therefore, our device may firstly check if its message has collided. A related information is broadcasted in downlink feedback following the uplink transmission frame. If the message did not collide, our device enters state "0", i.e., the procedure is already finished. Otherwise, our device will check whether at least the request was successful. If the request was successful, our device may calculate its position P(MQ) in the data message queue. P(MQ) is a function of L(MQ) and Request Collision Indicator RCI*ᵢ* (*i*=1...*R*)*.* Again there are two possible outcomes. Either it turns out that P(MQ) = 1, i.e. our device is allowed to send its message immediately again in the next time frame, or there are already other devices waiting in the data message queue (P(MQ) > 1). In the latter case, the device enters state "4" and will decrement P(MQ) by one in each uplink time frame, until P(MQ) = 1 (message transmission). Please note that message transmissions out of state "2", "3" and "4" cannot collide anymore.

Let us go back to the initial request transmission (state "1"). If our device is not allowed to send its message on top of the first request, it will enter state "3" and check whether or not this request was successful (indicated in a subsequent downlink feedback). If the request was successful, the scheme continues equivalently as already described above (calculation of P(MQ), etc.).

Collided requests must be resolved. DQRAP has a tree-splitting collision resolution mechanism, i.e., not all collided request occurred in one uplink time frame are resolved simultaneously, but over several subsequent frames. Let us consider an example with R=3 request symbols and six sent requests (from six devices). Three requests were sent on the first request symbol, one request was sent in the second request symbol, and two requests were sent on the third request symbol of the uplink frame's request portion. Obviously, only the single request on the second request symbol was successful, and the respective device will enter the data message queue. The three requests that collided on the first request symbol may be re-transmitted in the following uplink time frame assuming that no other request collisions are already waiting in the request queue. The three devices will again randomly choose one of the three request symbols for this re-transmission, i.e., instead of six devices in the previous frame, now only three devices compete against each other. The two devices that originally collided on the third request symbol will enter the request queue ("state 5"), decrement their pointer P(RQ) by one in each time frame and re-transmit the request once P(RQ) = 1. P(RQ) is a function of L(RQ) and RCIᵢ (*i*=1...*R*). In contrast to the data message queue, more than one device can have the same value P(RQ), i.e., it is not guaranteed that the request re-transmission is successful. However, due to the tree-splitting behavior, with each request re-transmission fewer devices compete for the request resources and the probability for success increases with each attempt.

Finally, note that the index *i* of the chosen request symbol has impact on the calculation of P(MQ) and P(RQ). Devices that chose a request symbol with lower index i will send their message earlier and eventually re-transmit their request earlier.

One of the main properties of DQRAP is that it behaves like a pure random access scheme if traffic load is light. In this case the devices will take the path over state "2" in Fig. 1. In high load scenarios, the devices will rather take the path over state "3," i.e. they need a successful request before they transmit their message, which corresponds to a reservation based access scheme.

Note that Fig. 1 corresponds to only one queuing system. If there are further queuing systems, then the other queuing systems may operate in the same way, but completely independent, i.e., there is not any exchange of information between these queuing systems.

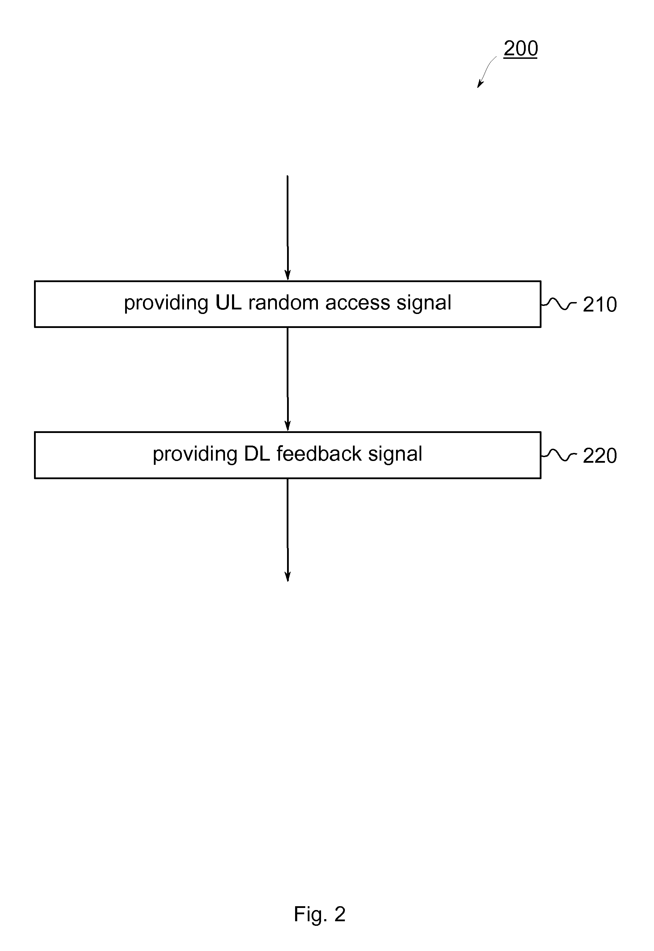

One idea of embodiments is to adapt the conventional Distributed Queuing Random Access Protocol (DQRAP), which has been explained with reference to Fig. 1, for a multi-carrier wireless radio system like Orthogonal Frequency Multiple Access (OFDM) or Universal Filtered Multi Carrier (UFMC). While the original DQRAP operates solely as Time Division Multiple Access (TDMA) scheme in Time Division Duplex (TDD), it is proposed to extend the scheme such that both time and frequency domains are exploited, i.e., the information to be transmitted is mapped on time symbols and frequency sub-carriers. Fig. 2 schematically illustrates a flowchart of a method 200 for enabling random access of a wireless device to a wireless multicarrier communication system.

Method 200 includes an act 210 of (wirelessly) providing or transmitting an uplink (UL) random access signal associated with a queuing system. The queuing system comprises a random request queue and/or a data message queue. The uplink random access signal includes a random access request portion for a sending random access request and a message portion for sending a data message. According to embodiments, the random access request portion and the message portion of the uplink random access signal span a plurality of time symbols and a plurality of uplink subcarriers of a multicarrier signal. Act 210 may be performed by a wireless device, such as a smartphone or a wireless sensor device, for example.

Method 200 includes a further act 220 of (wirelessly) providing or transmitting a downlink (DL) signal associated with the queuing system in response to the uplink random access signal. The downlink signal includes a feedback signal portion for providing feedback on the request queue and/or the data message queue of the queuing system. According to embodiments, also the downlink signal or at least the feedback signal portion extends over a plurality of time symbols and a plurality of downlink subcarriers.

Hence, embodiments propose exploiting both the time and frequency domain for both the uplink and downlink signals involved in the wireless random access procedure. Frames of the uplink and downlink signals may hence use physical radio resources in the time and the frequency domain. In the time domain, the frames comprise a plurality of time symbols. In the frequency domain, the frames comprise a plurality of subcarriers.

In some embodiments, the uplink random access signal and the downlink random access signal associated with the same queuing system may constitute a half-duplex system. In half a duplex system, each party can communicate to the other, but not simultaneously, the communication is one direction at a time. Hence, frames of the uplink random access signal and the downlink response signal may appear temporarily interlaced. In other words, a frame of the downlink signal may appear temporarily in between two adjacent frames of the uplink signal of the same queuing system.

Alternatively or additionally, embodiments propose the extension of DQRAP to FDD systems, i.e., uplink and downlink may operate in different frequency bands. Hence, the uplink random access signal and the related downlink signal associated with the same queuing system may be provided in FDD. However, as it may be assumed that for module cost reasons low-end machine devices will operate in Half-Duplex FDD, i.e., they may alternately transmit on the uplink (UL) frequency band or receive on the downlink (DL) frequency band, two or more interlaced queuing systems that work in the general case independent from each other may be introduced.

That is to say, method 200 may further include an act of providing, by a different wireless device and between two subsequent frames of the uplink random access signal associated with the (first) queuing system, a frame of a different (e.g. second) uplink random access signal associated with a different (e.g. second) queuing system. On the downlink side, method 200 may further include an act of providing, in response to the different (e.g. second) uplink random access signal, a frame of a different (e.g. second) downlink random access signal associated with the different (e.g. second) queuing system between two subsequent frames of the downlink random access signal associated with the (first) queuing system.

In such embodiments, each single queuing system may constitute a Half-Duplex FDD system, also considering the required switching time between transmit mode and receive mode, whereas both queuing systems together may constitute full duplex FDD, thus achieving the required efficient usage of the radio channel. The interlaced design may also minimize the waiting time of a device that intends to enter the random access procedure.

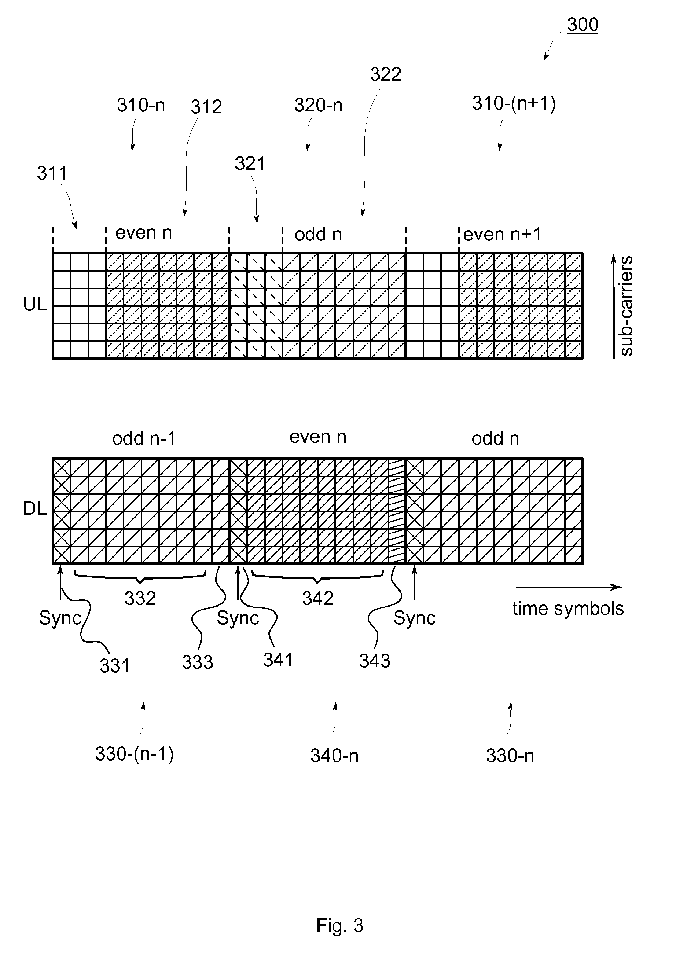

An embodiment of the proposed random access scheme is illustrated in Fig 3.

The upper portion of Fig. 3 illustrates different temporally interlaced frames 310, 320 of uplink access signals associated with two different queuing systems. The uplink signal frames 310-n and 310-(n+1) labeled as "even" are subsequent frames associated with a first queuing system. The uplink signal frame 320-n temporally in between the even uplink signal frames 310-n and 310-(n+1) and labeled as "odd" is a frame associated with a second, independent queuing system. The even uplink random access signal frames 310-n and 310-(n+1) each comprise a random access request signal portion 311 for sending random access request(s) and a message signal portion 312 for sending one data message associated with the first (even) queuing system. Similarly, the odd uplink random access signal frame 320-n comprises a random access request portion 321 for sending random access request(s) and a message portion 322 for sending one data message associated with the second (odd) queuing system. The random access request portions 311, 321 as well as the message portions 312, 322 extend over a plurality of time symbols and a plurality of uplink subcarriers. In the illustrated example, the random access request portions 311, 321 span over 3 time symbols and 6 uplink subcarriers. The message portions 312, 322 span over 7 time symbols and 6 uplink subcarriers. Note that Fig. 3 is only illustrative. Different configurations are possible.

In the illustrated example, the random access request portions 311, 321 of the uplink random access signal frames 310, 320 each use physical radio resources, i.e. time symbols and uplink subcarriers, accommodating at least three random access requests of different wireless devices. For example, a random access request may use one of the three available time symbols and the six available subcarriers. Further, the message portions 312, 322 of the uplink random access signal frames 310, 320 are provided subsequently to the respective frame's random access request portions 311, 321. Again, different configurations are possible. Note that accommodating at least three random access requests of different wireless devices may achieve a performance level approaching that of a hypothetical perfect scheduling protocol.

The lower portion of Fig. 3 illustrates different interlaced frames 330, 340 of downlink signals associated with the two different (even and odd) queuing systems. The downlink signal frames 330-(n-1) and 330-n labeled as odd are subsequent frames associated with the second (odd) queuing system. The downlink signal frame 340-n in between the odd downlink signal frames 330-(n-1) and 330-n and labeled as even is a frame associated with the first (even) queuing system. The odd downlink signal frames 330-(n-1) and 330-n each comprise a feedback signal portion 332 for providing feedback on collisions of prior random access requests and/or a data messages sent in the related uplink frames 320 of the same (odd) queuing system. Similarly, the even downlink signal frame 340-n comprises a feedback signal portion 342 for providing feedback on collisions of prior random access requests and/or a data messages sent in the related uplink frames 310 of the same (even) queuing system. The feedback signal portions 332, 342 each extend over a plurality of time symbols and a plurality of downlink subcarriers. In the illustrated example, the feedback signal portions 332, 342 span over 3 time symbols and 8 uplink subcarriers. Again note that Fig. 3 is only illustrative. Different implementations are possible.

Optionally, the downlink signal frames 330, 340 may be provided further including a respective synchronization signal portion 331, 341 enabling a temporal synchronization of a respective wireless device. For example, the downlink synchronization signal portions 331, 341 may transport queuing system specific synchronization signals. In the illustrated example, the downlink synchronization signal portions 331, 341 each span the plurality of six downlink subcarriers and the respective frame's first time symbol. Note that temporal synchronization to the uplink and downlink frames associated with embodiments of the random access procedure may also achieved differently from the described example.

Alternatively or additionally, the downlink signal frames 330, 340 may be provided further including respective acknowledgement signal portions 333, 343 indicating whether the wireless device's data message of the corresponding uplink random access signal 320, 310 has been successfully received or not. In the illustrated example, the acknowledgement signal portions 333, 343 each span the plurality of six downlink subcarriers and the respective frame's last time symbol.

The two interlaced queuing systems of Fig. 3 labeled as "even" and "odd" may be mapped alternately on UL and DL resources in such a way, that a wireless machine device entering in one arbitrary queuing system (even or odd) can operate in half duplex FDD. *n* denotes a random access frame index. Several consecutive time symbols constitute a random access frame in time dimension. In the illustrated example, 10 consecutive time symbols constitute a random access frame in time dimension. Again, different implementations are possible. Moreover, a queuing system spans over several sub-carriers in frequency dimension. In the illustrated example, 6 consecutive sub-carriers constitute a random access signal in frequency dimension. Note that different implementations are possible. It may be expected that a symbol duration in future 5G systems will be in the order of magnitude of 10-100 µs, a frame in the order of magnitude of 1 ms, a sub-carrier in the order of magnitude of 10 kHz, and a bunch of sub-carriers required for one queuing system as illustrated in Fig. 3 in the order of magnitude of 100 kHz.

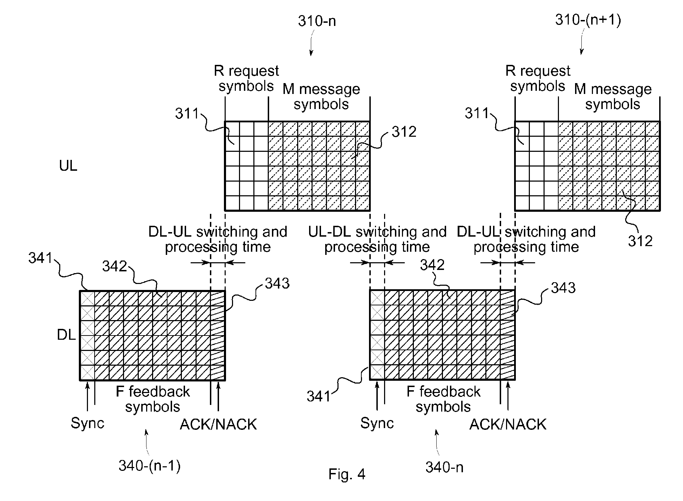

Turning now to Fig. 4, only one of the two aforementioned queuing systems is considered for the sake of simplicity. A second temporally interlaced system may operate in the same way, but independently.

A wireless device that intends to enter the random access procedure may firstly listen to the synchronization signal portion 341 periodically sent at the beginning of each downlink frame 340. The synchronization signal portion 341 may occupy one, e.g. the first, time symbol and may span over several downlink sub-carriers. In conjunction with a UFMC waveform this rough synchronization is sufficient.

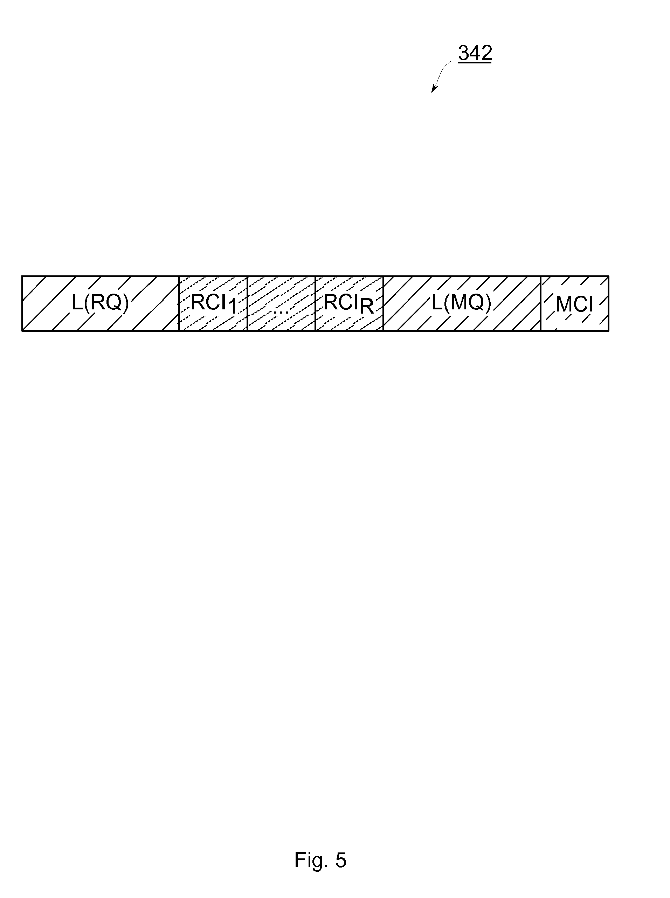

As a next step, the wireless device may decode the F feedback symbols of the feedback signal portion 342 sent in the same (or in one of the following) downlink frame(s) 340. Afterwards, the wireless device is aware of the current lengths of the data message queue L(MQ) and request queue L(RQ). The wireless device may also know, if requests and messages had been sent in the previous uplink frame 310, and whether or not these transmissions have collided. An example composition of the feedback information and its mapping on the F feedback symbols will be explained with reference to Fig. 5. Based on the decoded feedback information, the device may enter the known Distributed Queuing Random Access Protocol (DQRAP).

In some embodiments, the feedback signal portion 342 of the downlink random access frame 340 may comprise at least one of
- an indicator for a current length of the request queue, the request queue indicating a number of unresolved access request collisions,
- an indicator for a current length of the data message queue, the data message queue indicating a number of messages waiting for transmission,
- a request collision indicator related to the random access request portion of the uplink random access signal,
- a data message collision indicator related to the message portion of the uplink random access signal;
- a received signal strength indication of the uplink random access signal.

In the illustrated example of Fig. 5, the feedback portion 342 for one independent queuing system includes the following information:
1) Current length of the request queue L(RQ),
2) Ternary feedback for each single request symbol (no request detected, exact one request detected, or request collision). In Fig. 5, this is indicated as Request Collision Indicator (RCI),
3) Current length of the data message queue L(MQ),
4) Ternary feedback for the message field (no message, exact one message, or message collision). In Figure 4, this is indicated as Message Collision Indicator (MCI).

L(RQ) and L(MQ) may be positive integer values mapped to a sequence of bits. Two bytes, i.e., queue lengths up to 65536 may be enough for most implementations. RCI*ᵢ* (i = 1 *...R)* and MCI may consist of two bits each. As an example, the following mapping can be applied to RCI*ᵢ* and MCI: 00: empty; 01: one device has sent; 11: several devices have sent (collision).

Without additional overhead, an indication about the received signal strength may be added in the DL feedback for each successful request. This knowledge may help the device to select the right modulation and coding scheme as well as the right transmit power for its subsequent message transmission. An extended mapping may look like this: 00: empty; 01: one device has sent with low link quality; 10: one device has sent with high link quality; 11: several devices have sent (collision).

An estimation of the required amount of feedback is 2*2 bytes + 2*(*R*+1) bits. A realistic value for the number of request symbols in the uplink random access request portion is R=3. Thus, the feedback in the downlink feedback portion 342 may consist of 5 bytes (upper bound). Note that this number is independent from the number of devices in the system.

The feedback 342 may be mapped to the F time symbols and all available subcarriers of the downlink frame shown in Fig. 4, also considering the required redundancy for error correction and potential repetitions of the same information.

One particularity of embodiments is the proposed mapping of requests and messages onto the proposed frame structure of Fig. 4. It is proposed to spend the first R time symbols in the uplink frames 310 for the transmission of requests. Hence, the random access request portion 311 may comprise R time symbols. Each single random access request may occupy just one single time symbol and may span over several frequency sub-carriers. This means that a device may transmit its request on one arbitrary out of R available time symbols of the random access request portion 311 and is silent on the remaining *R*-1 symbols. The request need not include any information, but it shall enable a base station to distinguish between three different cases:
1) no device has sent a request,
2) one device has sent a request, and
3) more than one devices have sent requests.

The base station may carry out this detection for all R request time symbols independently. Thus, a request may be constituted by a so-called request pattern. The latter can be a bit sequence mapped on the subcarriers of the selected symbol. The base station is then able to detect whether the received pattern originates from only one or from multiple devices. In some embodiments, it is further proposed, that the following M time symbols and all available sub-carriers are reserved for the message the device intends to transmit. Hence, the message portion 312 may comprise M time symbols and all available sub-carriers.

When the device has successfully sent its message in the uplink, it may await an ACK/NACK from the base station in the downlink. It is proposed that e.g. the last time symbol in the downlink frame 340 is reserved for the ACK/NACK message 343 that may span over all sub-carriers of said symbol. Other mappings of the signal portions shown in Fig. 4 on the resource elements (subcarriers and time symbols) are also possible and included as well.

Embodiments of the proposed signal or frame structure may enable a wireless device to operate in FDD Half Duplex. All devices that carry out the proposed random access scheme may use the first symbol of the downlink frame 340 to switch from transmit mode to receive mode, because once synchronized it may not be required anymore to listen to the periodically sent Sync signal 341. The base station, which may operate in full duplex mode if more than one queuing system is used, may use this symbol to process received requests and messages and calculate according feedback information.

A device that has not yet sent its message and that may be required to re-transmit a request can use the last time symbol of the downlink frame 340 to switch from receive- to transmit mode and to process the received feedback. If the device has already sent its message, it may stay in receive mode and await the ACK/NACK signal portion 343.

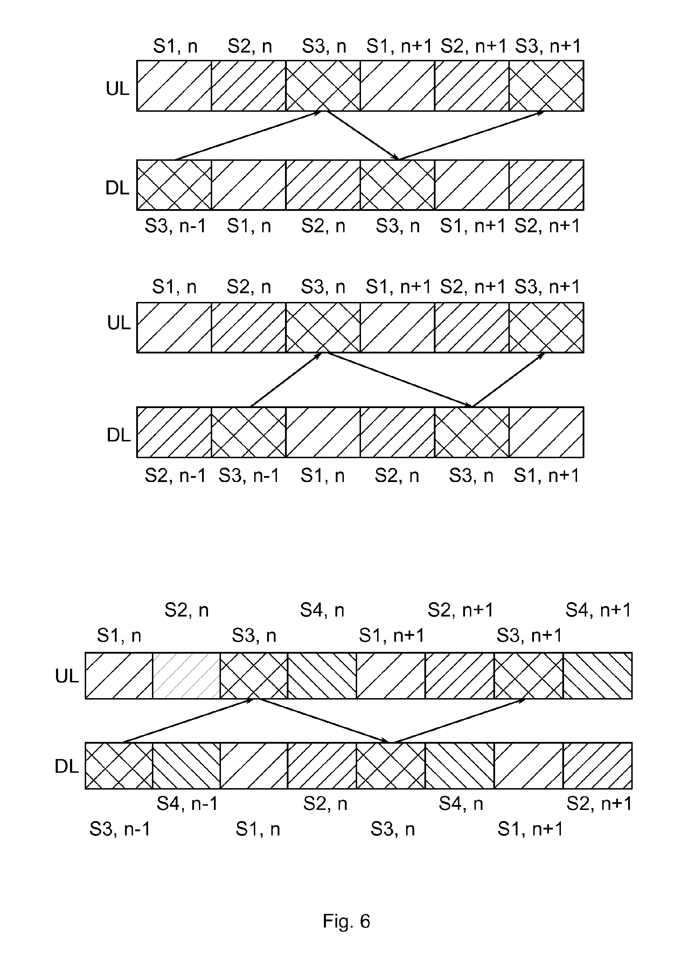

If it turns out that one symbol switching and processing time is not sufficient, one of the following options may be applied:
1) Fig. 4 indicates that the F feedback symbols of the feedback portion 342 may occupy the complete downlink frame 340 except its first and the last symbol. However, the amount of feedback information may be rather small so that it may be mapped on a smaller number of time symbols e.g. located in the center of the downlink frame 340, thus allowing for longer switching and processing periods at the beginning and at the end of the downlink frame, respectively.
2) It may also be possible to repeat the same feedback information several times in the downlink frame 340. The devices may collect as much repetitions as they need to decode the information. A device that missed a first feedback transmission starting at the second downlink symbol in Fig. 4 due to a too late switching period from transmit- to receive mode has still the possibility to receive the complete feedback information with subsequent repetitions in the same frame or feedback portion.
3) If the two aforementioned options fail, it is also possible to extend the complete interlaced scheme shown in Fig. 3 with one or more additional independent queuing systems. In other words, we would not only see the two interlaced (even and odd) queuing systems but an extended interlaced scheme as exemplified in Fig. 6. S1, S2, S3 and so on indicate multiple different queuing systems, and *n* is a discrete random access frame index. Each wireless device operates in only one single queuing system, e.g. in queuing system S3. The arrows in Fig. 6 illustrate the subsequent UL transmit- and DL receive periods of devices associated with queuing system S3.

With three interlaced queuing systems S1, S2, S3, two different options are possible. Depending on the bottleneck (switching from transmit- to receive mode or vice versa), one appropriate option can be selected. A first option is illustrated in the upper portion of Fig. 6. It relaxes the switching period from RX mode to TX mode at the device. Here, the downlink frame *n*-1 of queuing system S3 is located two frames before the subsequent uplink frame *n* of queuing system S3. The uplink frame *n* of queuing system S3 is located one frame before the related downlink frame *n* of queuing system S3. The same holds for the other queuing systems S1 and S2.

A second option is illustrated in the middle portion of Fig. 6. It relaxes the switching period from TX mode to RX mode at the device. Here, the downlink frame *n*-1 of queuing system S3 is located one frame before the subsequent uplink frame *n* of queuing system S3. The uplink frame *n* of queuing system S3 is located two frames before the related downlink frame *n* of queuing system S3. Here, the same holds for the other queuing systems S1 and S2.

The scheme shown in the lower portion of Fig. 6 illustrates the case with four interlaced queuing systems S1 - S4. A possibility for an extension to more than four queuing systems is obvious. Here, the downlink frame *n*-1 of queuing system S3 is located two frames before the subsequent uplink frame *n* of queuing system S3. The uplink frame *n* of queuing system S3 is also located two frames before the related downlink frame *n* of queuing system S3. However, note that the mean delay time of messages increases compared to the most efficient interlaced scheme in Fig. 3.

In the following a possible extension of embodiments to multiple simultaneous messages will be described.

Fig. 4 shows an example frame structure of one queuing system assigned to one set of physical time-frequency resources for message transmission. In other words, according to the embodiment of Fig. 4, one message can be successfully transmitted per uplink time frame. In many cases, however, this may not be sufficient. One option could be to establish more than one queuing system contemporarily operating in the same time frame. A separation of these different queuing systems could be realized, e.g., in Frequency Division Multiple Access (FDMA), i.e., different queuing systems operating in the same time frame utilize different bunches of frequency sub-carriers, or in Code Division Multiple Access (CDMA), i.e., different queuing systems operating in the same time frame utilize different orthogonal superimposed codes. Also a combination of both is possible or other multiple access techniques like Space Division Multiple Access (SDMA) can be applied. The number of these queuing systems can be either fixed, or be configured dynamically by the network according to the traffic load. In other words, the wireless multicarrier communication system may use a plurality of contemporarily or simultaneously operating queuing systems for random access. Each of the different queuing systems may provide a queuing-system-specific uplink random access and/or downlink feedback signal spanning over a plurality of time symbols and a plurality of subcarriers, respectively. Different queuing systems may be separated by FDMA, CDMA, SDMA, or a combination thereof. Other multiple access techniques are also conceivable. One benefit of this "stacking" of resources is that machine type traffic originating from different sources (e.g. different applications, different delay requirements, different traffic behavior, different priority, etc.) can be separated in independently operating queuing systems.

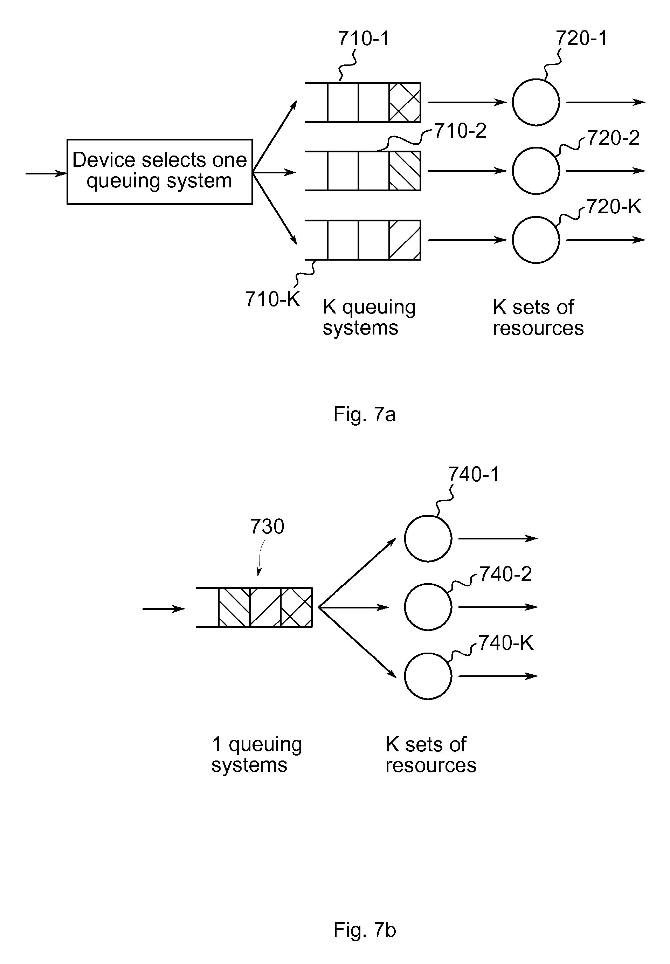

The latter option is schematically illustrated in Fig. **7a****.** A device may select one of a plurality of *K* queuing systems 710-1 to 710-*K* for randomly accessing a multicarrier communication system. Each of the K queuing systems 710-1 to 710-*K* contemporarily uses a different, distinct set of physical uplink and/or downlink radio resources 720-1 to 720-*K* by employing a multiple access scheme allowing the contemporary use of the different sets of physical uplink and/or downlink radio resources 710-1 to 720-K, such as FDMA, CDMA, SDMA, or a combination thereof. The selection of the queuing system 710-1 to 710-*K* can be done, e.g., according broadcasted queue lengths. For example, each device may select the queuing system with the smallest value L(MQ). It is also possible to do this selection according to delay constraints, application type, battery status or service priority.

An alternative scheme, shown in Fig. 7b, can be established in the following way. One single queuing system 730 is responsible for multiple sets of resources for message transmissions. The queuing system 730 may use a plurality of physical radio resource sets 740-1 to 740-*K* for simultaneous transmission of data messages associated with different wireless devices. If there are *K* sets of radio resources available, then the first *K* devices waiting in the data message queue may send their messages in the following uplink time frame by contemporarily using a different physical radio resource set 740-1 to 740-K, respectively, for example by employing a multiple access scheme allowing the contemporary use of the different sets of physical uplink and/or downlink radio resources 710-1 to 720-*K*, such as FDMA, CDMA, SDMA, or a combination thereof.

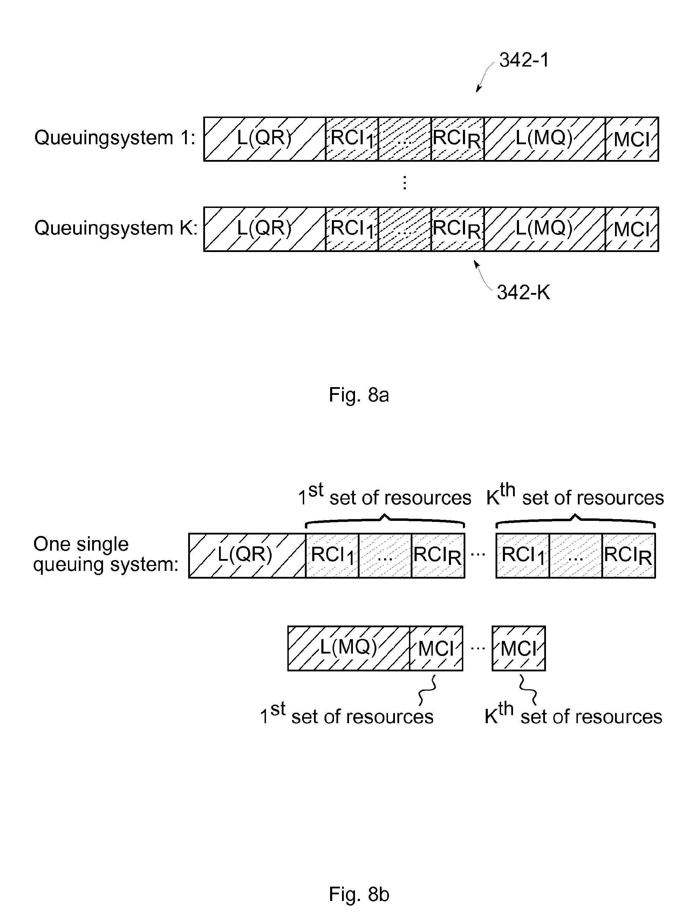

**Figs. 8a** and **8b** compare the corresponding downlink feedback information. Fig. 8a shows downlink feedback signal portions 342-1 and 342-*K* for K sets of radio resources controlled by K queuing systems. Each feedback signal portion 342-1 and 342-*K* may correspond to what has been described with respect to Fig. 5. Fig. 8b shows an example downlink feedback signal portion 842 for one queuing system. Here, the downlink feedback signal portion 842 may include R Request Collision Indicator (RCI) for each set of resources as well as K Message Collision Indicators (MCI). According to the calculation in the previous section, the overall amount of required feedback information may be much smaller in the case that all K sets of resources are controlled by one single queuing system.

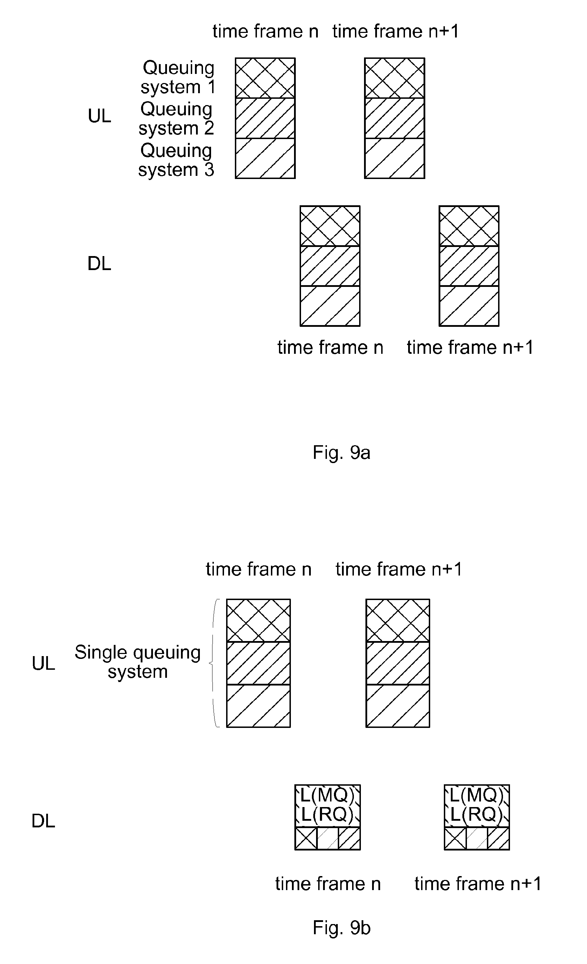

**Figs. 9a** and **9b** compare the corresponding uplink and downlink frame structure. It may be regarded as an extension of the scheme shown in Fig. 4. Fig. 9a shows a schematic view of the frame structure for K sets of resources controlled by K queuing systems, while Fig. 9b shows a schematic view of the frame structure for K sets of resources controlled by one queuing system.

In the K queuing systems scheme according to Fig. 9a, both uplink and downlink contemporarily use different sets of physical radio resources associated with the different queuing systems. Frames of the different uplink random access signals associated with the different queuing systems and radio resource sets appear contemporarily or simultaneously. Likewise, frames of the different downlink (feedback) signals associated with the different queuing systems and radio resource sets appear contemporarily or simultaneously. However, uplink frames and the downlink frames still appear temporarily interlaced. In other words, a frame of a downlink signal may appear temporarily in between two adjacent frames of the related uplink signal of the same queuing system.

In the one queuing system scheme according to Fig. 9b, only the uplink random access channel contemporarily uses different sets of physical radio resources associated with the different queuing systems. Frames of the different uplink random access signals associated with the different radio resource sets appear contemporarily or simultaneously. Frames of the downlink (feedback) signal associated with the different radio resource sets used by the queuing system scheme appear in between two subsequent frames of the related uplink signals.

Obviously, the two presented schemes for controlling K sets of resources can be also arbitrarily combined. As an example, 2 queuing systems operating in the same time frame may control *K*/2 sets of resources each, or 4 queuing systems *K*/4 sets of resources each, etc.

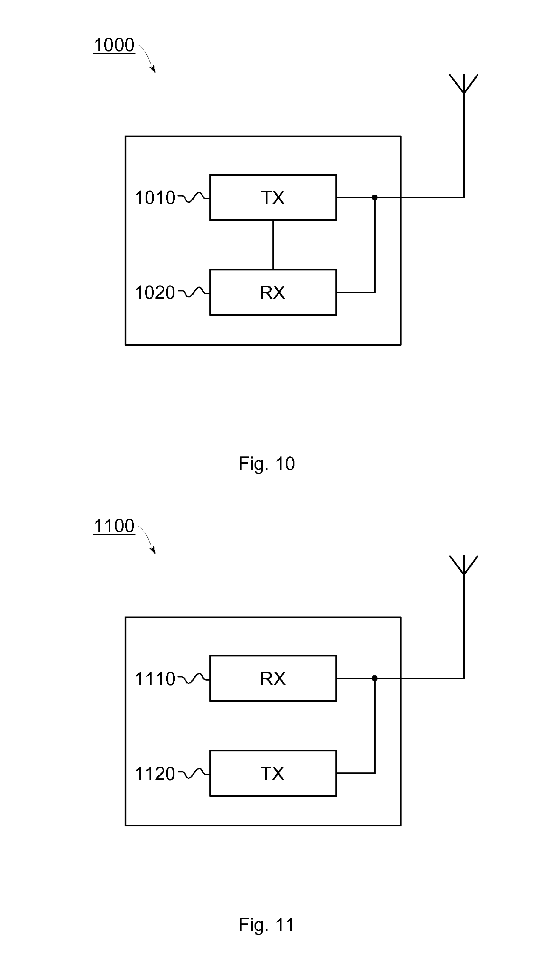

**Fig. 10** schematically shows a block diagram of an example wireless device 1000 for a wireless multicarrier communication system.

Wireless device 1000, for example a portable user device, includes transmitter circuitry 1010 configured to transmit an uplink random access signal 310 associated with a queuing system. The uplink random access signal 310 comprising a random access request portion 311 for a sending random access request and a message portion 312 for sending a data message. The random access request portion 311 and the message portion 312 both extend over a plurality of time symbols and a plurality of uplink subcarriers. Further, wireless device 1000 includes receiver circuitry 1020 configured to receive, in response to the uplink random access signal 310, a downlink signal 340 associated with the same queuing system. The downlink signal 340 comprises a feedback signal portion 342 for providing feedback on a request and/or a data message queue of said queuing system. The feedback signal portion 342 extends over a plurality of time symbols and a plurality of downlink subcarriers.

**Fig. 11** schematically shows a block diagram of an example network entity 1100 of a wireless multicarrier communication system.

Network entity 1100, for example a base station, includes receiver circuitry 1110 configured to receive a first uplink random access signal 310 associated with a first queuing system. The first uplink random access signal 310 comprises a random access request portion 311 for sending a random access request and a message portion 312 for sending a data message. The random access request portion 311 and the message portion 312 both extend over a plurality of time symbols and a plurality of uplink subcarriers. Further, network entity 1100 includes transmitter circuitry 1120 configured to transmit, in response to the first uplink random access signal 310, a first downlink signal 340 associated with the first queuing system. The downlink signal 340 comprises a feedback signal portion 342 for providing feedback on a request and/or a data message queue. The feedback signal portion 342 spans over a plurality of time symbols and a plurality of downlink subcarriers.

In one embodiment, receiver circuitry 1110 is configured to receive a frame of a second uplink random access signal 320 associated with a second queuing system between two subsequent frames of the first uplink random access signal 310 associated with the first queuing system. Transmitter circuitry 1120 is configured to transmit, in response to the second uplink random access signal 320, a frame of a second downlink signal 330 associated with the second queuing system between two subsequent frames of the first downlink signal 340 associated with the first queuing system.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks shall be understood as functional blocks comprising circuitry that is adapted for performing a certain function, respectively. Hence, a "module or entity for s.th." may as well be understood as a "module or entity being adapted or suited for s.th.". A module or entity being adapted for performing a certain function does, hence, not imply that such means necessarily is performing said function (at a given time instant).

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple acts or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. Method (200) for enabling random access of a wireless device to a wireless multi-carrier communication system, the method comprising:
providing (210), by the wireless device, an uplink random access signal (310) associated with a queuing system, the uplink random access signal (310) comprising a random access request portion (311) for a sending random access request and a message portion (312) for sending a data message, wherein the random access request portion and the message portion extend over a plurality of time symbols and a plurality of uplink subcarriers;
providing (220), by the communication network and in response to the uplink random access signal (310), a downlink signal (340) associated with the queuing system, the downlink signal (340) comprising a feedback signal portion (342) for providing feedback on a request queue and a data message queue of the queuing system, wherein the feedback signal portion (342) extends over a plurality of time symbols and a plurality of downlink subcarriers.

2. The method (200) of claim 1, wherein the uplink random access signal (310) and the downlink signal (340) associated with the queuing system constitute a half-duplex system.

3. The method (200) of claim 1, wherein the uplink random access signal (310) and the downlink signal (340) associated with the queuing system are provided in Frequency Division Duplex, FDD.

4. The method (200) of claim 1, wherein the uplink random access signal (310) is provided in a frame structure, and wherein the random access request portion (311) of an uplink random access signal frame (310-n) uses physical radio resources accommodating at least three random access requests of different wireless devices.

5. The method (200) of claim 1, wherein providing (220) the downlink signal (340) comprises providing a synchronization signal portion (341) enabling a temporal synchronization of the wireless device.

6. The method (200) of claim 5, wherein the downlink random access signal (340) is provided in a frame structure, and wherein the synchronization signal portion (341) of a downlink random access signal frame (340-n) spans the plurality of downlink subcarriers and at least one time symbol.

7. The method (200) of claim 1, wherein the feedback signal portion (342) of the downlink random access signal (340) comprises at least one of
• an indicator for a current length of the request queue, the request queue indicating a number of unresolved access request collisions,
• an indicator for a current length of the data message queue, the data message queue indicating a number of messages waiting for transmission,
• a request collision indicator related to the random access request portion of the uplink random access signal,
• a data message collision indicator related to the message portion of the uplink random access signal;
• a received signal strength indication of the uplink random access signal.

8. The method (200) of claim 1, wherein providing (220) the downlink signal (340) comprises providing an acknowledgement signal portion (343) indicating whether the wireless device's data message has been successfully received.

9. The method (200) of claim 1, wherein the downlink signal (340) is provided in a frame structure, and wherein the acknowledgement signal portion (343) of a downlink random access signal frame (340-n) spans the plurality of downlink subcarriers and at least one time symbol.

10. The method (200) of claim 1, further comprising:
providing, by a different wireless device and between two subsequent frames (310-n; 310-(n+1)) of the uplink random access signal associated with the queuing system, a frame (320-n) of a different uplink random access signal (320) associated with a different queuing system; and
providing, in response to the different uplink random access signal (320), a frame (330-n) of a different downlink signal associated with the different queuing system between two subsequent frames of the downlink signal (340) associated with the queuing system.

11. The method (200) of claim 1, wherein the queuing system (730) comprises a plurality of physical radio resource sets (740) for simultaneous transmission of data messages associated with different wireless devices.

12. The method (200) of claim 1, wherein the wireless multicarrier communication system uses a plurality of contemporarily operating queuing systems (710), each of the queuing systems providing a queuing-system-specific uplink- and downlink random access signal spanning over a plurality of time symbols and a plurality of subcarriers, respectively, wherein different queuing systems are separated by Frequency Division Multiple Access, FDMA, Code Division Multiple Access, CDMA, Space Division Multiple Access, SDMA, or a combination thereof.

13. A wireless device (1000) for a wireless multicarrier communication system, the wireless device comprising:
transmitter circuitry (1010) configured to transmit an uplink random access signal (310) associated with a queuing system, the uplink random access signal (310) comprising a random access request portion (311) for a sending random access request and a message portion (312) for sending a data message, wherein the random access request portion and the message portion extend over a plurality of time symbols and a plurality of uplink subcarriers; and
receiver circuitry (1020) configured to receive, in response to the uplink random access signal (310), a downlink signal (340) associated with the queuing system, the downlink signal (340) comprising a feedback signal portion (342) for providing feedback on a request and/or a data message queue of the queuing system, wherein the feedback signal portion (342) extends over a plurality of time symbols and a plurality of downlink subcarriers.

14. A network entity (1100) of a wireless multicarrier communication system, the network entity comprising:
receiver circuitry (1110) configured to receive a first uplink random access signal (310) associated with a first queuing system, the first uplink random access (310) signal comprising a random access request portion (311) for a sending random access request and a message portion (312) for sending a data message, wherein the random access request portion and the message portion extend over a plurality of time symbols and a plurality of uplink subcarriers; and
transmitter circuitry (1120) configured to transmit, in response to the first uplink random access signal (310), a first downlink signal (340) associated with the first queuing system, the downlink signal (340) comprising a feedback signal portion (342) for providing feedback on a request and a data message queue of the first queuing system, wherein the feedback signal portion (342) spans a plurality of time symbols and a plurality of downlink subcarriers.

15. The network entity (1100) of claim 14, wherein
the receiver circuitry (1110) is configured to receive a frame of a second uplink random access signal (320) associated with a second queuing system between two subsequent frames of the first uplink random access signal (310) associated with the first queuing system, and wherein
the transmitter circuitry (1120) is configured to transmit, in response to the second uplink random access signal (320), a frame of a second downlink signal (330) associated with the second queuing system between two subsequent frames of the first downlink signal (340) associated with the first queuing system.

## Amended claims

### Amended claims in accordance with Rule 137(2) EPC.

1. Method (200) for enabling random access of a wireless device to a wireless multicarrier communication system, the method comprising:
providing (210), by the wireless device, an uplink random access signal (310) associated with a queuing system, the uplink random access signal (310) comprising a random access request portion (311) for a sending random access request and a message portion (312) for sending a data message, wherein the random access request portion and the message portion extend over a plurality of time symbols and a plurality of uplink subcarriers;
providing (220), by the communication network and in response to the uplink random access signal (310), a downlink signal (340) associated with the queuing system, the downlink signal (340) comprising a feedback signal portion (342) for providing feedback on a request queue and/or a data message queue of the queuing system, wherein the feedback signal portion (342) extends over a plurality of time symbols and a plurality of downlink subcarriers.

2. The method (200) of claim 1, wherein the uplink random access signal (310) and the downlink signal (340) associated with the queuing system constitute a half-duplex system.

3. The method (200) of claim 1, wherein the uplink random access signal (310) and the downlink signal (340) associated with the queuing system are provided in Frequency Division Duplex, FDD.

4. The method (200) of claim 1, wherein the uplink random access signal (310) is provided in a frame structure, and wherein the random access request portion (311) of an uplink random access signal frame (310-n) uses physical radio resources accommodating at least three random access requests of different wireless devices.

5. The method (200) of claim 1, wherein providing (220) the downlink signal (340) comprises providing a synchronization signal portion (341) enabling a temporal synchronization of the wireless device.

6. The method (200) of claim 5, wherein the downlink random access signal (340) is provided in a frame structure, and wherein the synchronization signal portion (341) of a downlink random access signal frame (340-n) spans the plurality of downlink subcarriers and at least one time symbol.

7. The method (200) of claim 1, wherein the feedback signal portion (342) of the downlink random access signal (340) comprises at least one of
• an indicator for a current length of the request queue, the request queue indicating a number of unresolved access request collisions,
• an indicator for a current length of the data message queue, the data message queue indicating a number of messages waiting for transmission,
• a request collision indicator related to the random access request portion of the uplink random access signal,
• a data message collision indicator related to the message portion of the uplink random access signal;
• a received signal strength indication of the uplink random access signal.

8. The method (200) of claim 1, wherein providing (220) the downlink signal (340) comprises providing an acknowledgement signal portion (343) indicating whether the wireless device's data message has been successfully received.

9. The method (200) of claim 1, wherein the downlink signal (340) is provided in a frame structure, and wherein the acknowledgement signal portion (343) of a downlink random access signal frame (340-n) spans the plurality of downlink subcarriers and at least one time symbol.

10. The method (200) of claim 1, further comprising:
providing, by a different wireless device and between two subsequent frames (310-n; 310-(n+1)) of the uplink random access signal associated with the queuing system, a frame (320-n) of a different uplink random access signal (320) associated with a different queuing system; and
providing, in response to the different uplink random access signal (320), a frame (330-n) of a different downlink signal associated with the different queuing system between two subsequent frames of the downlink signal (340) associated with the queuing system.

11. The method (200) of claim 1, wherein the queuing system (730) comprises a plurality of physical radio resource sets (740) for simultaneous transmission of data messages associated with different wireless devices.

12. The method (200) of claim 1, wherein the wireless multicarrier communication system uses a plurality of contemporarily operating queuing systems (710), each of the queuing systems providing a queuing-system-specific uplink- and downlink random access signal spanning over a plurality of time symbols and a plurality of subcarriers, respectively, wherein different queuing systems are separated by Frequency Division Multiple Access, FDMA, Code Division Multiple Access, CDMA, Space Division Multiple Access, SDMA, or a combination thereof.

13. A wireless device (1000) for a wireless multicarrier communication system, the wireless device comprising:
transmitter circuitry (1010) configured to transmit an uplink random access signal (310) associated with a queuing system, the uplink random access signal (310) comprising a random access request portion (311) for a sending random access request and a message portion (312) for sending a data message, wherein the random access request portion and the message portion extend over a plurality of time symbols and a plurality of uplink subcarriers; and
receiver circuitry (1020) configured to receive, in response to the uplink random access signal (310), a downlink signal (340) associated with the queuing system, the downlink signal (340) comprising a feedback signal portion (342) for providing feedback on a request queue and/or a data message queue of the queuing system, wherein the feedback signal portion (342) extends over a plurality of time symbols and a plurality of downlink subcarriers.

14. A network entity (1100) of a wireless multicarrier communication system, the network entity comprising:
receiver circuitry (1110) configured to receive a first uplink random access signal (310) associated with a first queuing system, the first uplink random access (310) signal comprising a random access request portion (311) for a sending random access request and a message portion (312) for sending a data message, wherein the random access request portion and the message portion extend over a plurality of time symbols and a plurality of uplink subcarriers; and
transmitter circuitry (1120) configured to transmit, in response to the first uplink random access signal (310), a first downlink signal (340) associated with the first queuing system, the downlink signal (340) comprising a feedback signal portion (342) for providing feedback on a request queue and/or a data message queue of the first queuing system, wherein the feedback signal portion (342) spans a plurality of time symbols and a plurality of downlink subcarriers.

15. The network entity (1100) of claim 14, wherein
the receiver circuitry (1110) is configured to receive a frame of a second uplink random access signal (320) associated with a second queuing system between two subsequent frames of the first uplink random access signal (310) associated with the first queuing system, and wherein
the transmitter circuitry (1120) is configured to transmit, in response to the second uplink random access signal (320), a frame of a second downlink signal (330) associated with the second queuing system between two subsequent frames of the first downlink signal (340) associated with the first queuing system.
